# EUROPEAN PATENT APPLICATION

(11) **EP 4 400 772 A1**
(43) Date of publication of application: **17.07.2024**
(21) Application number: 24151776.2
(22) Date of filing: 15.01.2024
(51) Int. Cl.: F24C 15/32, F24C 7/06, F24C 7/08

(54) **VENTILATED OVEN AND METHOD FOR OPERATING A VENTILATED OVEN IN AIR FRY MODE**

(30) Priority: 16.01.2023 IT 202300000489
(71) Applicant: SMEG S.p.A., 42016 Guastalla (RE) (IT)
(72) Inventor: CANTONI, Daniele, 42016 GUASTALLA (RE) (IT); DALL'OGLIO, Alberto, 42016 GUASTALLA (RE) (IT)
(74) Representative: Studio Torta S.p.A.

(57) **Abstract**

A ventilated oven comprising:
• a muffle, which extends along a longitudinal axis and defines a cooking chamber with an opening; the muffle comprising a back wall opposite the opening and orthogonal to the axis, a roof wall parallel to the axis, a floor wall parallel to the axis, and two side walls parallel to the axis;
• at least one first fan, which is coupled to the back wall;
• at least one grill resistance, which is housed in the cooking chamber and is coupled to the roof wall;
• at least one first bottom resistance, which is housed in the cooking chamber, is coupled to the back wall, and extends substantially around the first fan;
• at least one sole resistance, which is located outside the cooking chamber and is coupled externally to the floor wall;
• a control device, configured to regulate the operation of the oven by selective activation of the fan and/or the grill resistance, and/or the bottom resistance and/or the sole resistance;
the control device being configured to operate the oven in the air fry mode; wherein the air fry mode comprises a preheating step, wherein the food is not housed in the cooking chamber, and a cooking step wherein the food is housed in the cooking chamber; wherein the control device is configured to activate the at least one first bottom resistance and the first fan during the cooking step.

## Description

### CROSS-REFERENCE TO RELATED APPLICATIONS

This patent application claims priority from Italian patent application no. 102023000000489 filed on January 16, 2023, the entire disclosure of which is incorporated herein by reference.

### Technical field

The present invention relates to a ventilated oven for cooking food and a method for operating a ventilated oven for cooking food in air-fry mode.

The technical field of reference of the present invention is therefore that of ventilated ovens (domestic and professional) for cooking food.

Ovens for cooking food are progressively evolving over the years through the integration of new cooking functions and modes.

In recent years, the focus on healthy, low-fat cooking methods has led to the emergence of air fryers, which have a similar structure to traditional deep-fryers, but do not require the food to be immersed in hot oil. In these devices, the cooking is done by circulating hot air and using very little oil compared to the amount required for traditional "immersion" frying.

Air frying is healthier than oil frying, because it reduces calories by 70% to 80% and contains much less fat.

With a view to integrating as much as possible all types of cooking in ovens for cooking food, the need arose to implement a method for operating an oven in air-fry mode in order to obtain a type of cooking as close as possible to that achievable by an air fryer.

This will allow the user to have several cooking functions integrated in one oven (e.g., air fry, grill, steam, microwave, etc.).

### State of the art

Currently, there are a few ovens incorporating an air-fry function. However, the cooking result is not always satisfactory and comparable to a "traditionally fried" food. In fact, air frying achieves a result comparable to that achievable by traditional frying when the food has a crispy coating and a soft interior.

### Description of the invention

It is therefore an object of the present invention to provide a ventilated oven which can operate in air-fry mode to achieve a cooking result as comparable as possible to that achievable by traditional frying, but with a very limited use of fat.

In accordance with this object, the present invention relates to a ventilated oven comprising:
- a muffle, which extends along a longitudinal axis and defines a cooking chamber with an opening; the muffle comprising a back wall opposite the opening and orthogonal to the axis, a roof wall parallel to the axis, a floor wall parallel to the axis, and two side walls parallel to the axis;
- at least one first fan, which is coupled to the back wall;
- at least one grill resistance, which is housed in the cooking chamber and is coupled to the roof wall;
- at least one first bottom resistance, which is housed in the cooking chamber, is coupled to the back wall, and extends substantially around the first fan;
- at least one sole resistance, which is located outside the cooking chamber and is coupled externally to the floor wall;
- a control device, configured to regulate the operation of the oven by selective activation of the fan and/or the grill resistance, and/or the bottom resistance and/or the sole resistance;
   the control device being configured to operate the oven in the air fry mode; wherein the air fry mode comprises a preheating step, wherein the food is not housed in the cooking chamber, and a cooking step wherein the food is housed in the cooking chamber; wherein the control device is configured to activate the at least one first bottom resistance and the respective first fan during the cooking step.

Advantageously, ventilated cooking with the activation of the bottom resistance alone gives a very satisfactory result in terms of food cooking. Moreover, the external browning obtained through the oven according to the invention is crispy and tasty and requires the use of very little fat.

By using the air fry cooking mode of the ventilated oven according to the present invention it is possible to obtain very satisfactory results for foods, such as chicken nuggets, cordon bleu, etc., which require a crispy external browning and a complete and soft internal cooking.

It is also a further object of the invention to provide a method for operating a ventilated oven in air-fry mode, which is capable of optimizing the cooking and achieving a result as close as possible to that achievable by traditional frying and which, at the same time, is convenient and easy to use.

In accordance with this object, the present invention relates to a method for operating a ventilated oven in air-fry mode as claimed in claim 13.

### List of figures

Further features and advantages of the present invention will be apparent from the following description of a non-limiting embodiment thereof, with reference to the figures of the accompanying drawings, wherein:
- Figure 1 is a schematic representation of a ventilated oven according to the present invention, with parts removed for clarity and parts in transparency;
- Figure 2 is a schematic representation of a first detail of the ventilated oven according to the present invention in an operating configuration;
- Figure 3 is a schematic representation of a second detail of the steam oven according to the present invention in a further operating configuration.

### Description of one embodiment of the invention

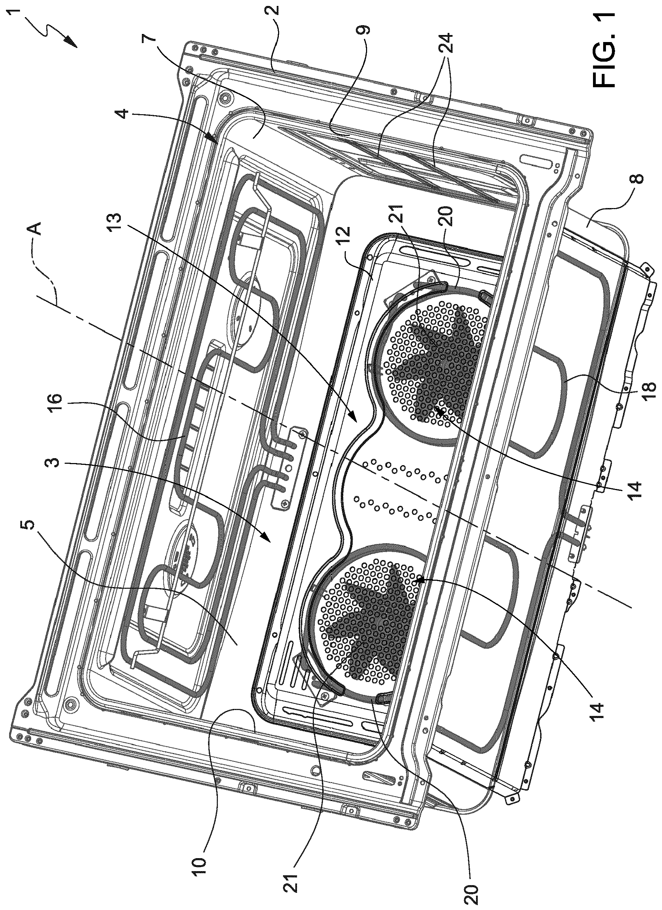

In Figure 1, reference number 1 indicates a ventilated oven (with many parts removed for clarity) comprising a muffle 2 defining a cooking chamber 3.

The muffle 2 extends along a longitudinal axis A, has an opening 4 and is bounded by a back wall 5 opposite the opening 4, a roof wall 7, a floor wall 8, and two side walls 9, 10.

The back wall 5 is orthogonal to the longitudinal axis A. The roof wall 7, the floor wall 8, and the side walls 9 and 10 are substantially axial.

The muffle 2 in Figure 1 is a muffle for a ventilated oven and is also provided with a deflector 12 housed in the cooking chamber 3 and coupled to the back wall 5 to define, together with the back wall 5, a ventilation space 13.

The deflector 12 is provided with at least one ventilation grill 14. In the non-limiting example described and illustrated herein, the deflector 12 is provided with two ventilation grills 14.

Preferably, the deflector 12 is coupled to the back wall 5 so as to also define perimeter openings, which are sized and configured to achieve the most even distribution of heat within the cooking chamber 3.

The oven 1 also comprises a grill resistance 16, which is housed in the cooking chamber 3 and coupled to the roof wall 7, a sole resistance 18, which is located outside the cooking chamber 3 and coupled externally to the floor wall 8, two bottom resistances 20, and two fans 21. Each bottom resistance 20 substantially extends around a respective fan 21.

The bottom resistances 20 and the respective fans 21 are housed in the ventilation space 13. In particular, the ventilation grills 14 are arranged next to the fans 21.

Preferably, the fans 21 are arranged symmetrically relative to a median plane parallel to the side walls 9 and 10.

Along the side walls 9, 10, the oven 1 is equipped with axial side guides 24 (not all visible in Figure 1) coupled to the respective side walls 9, 10 of the muffle 2.

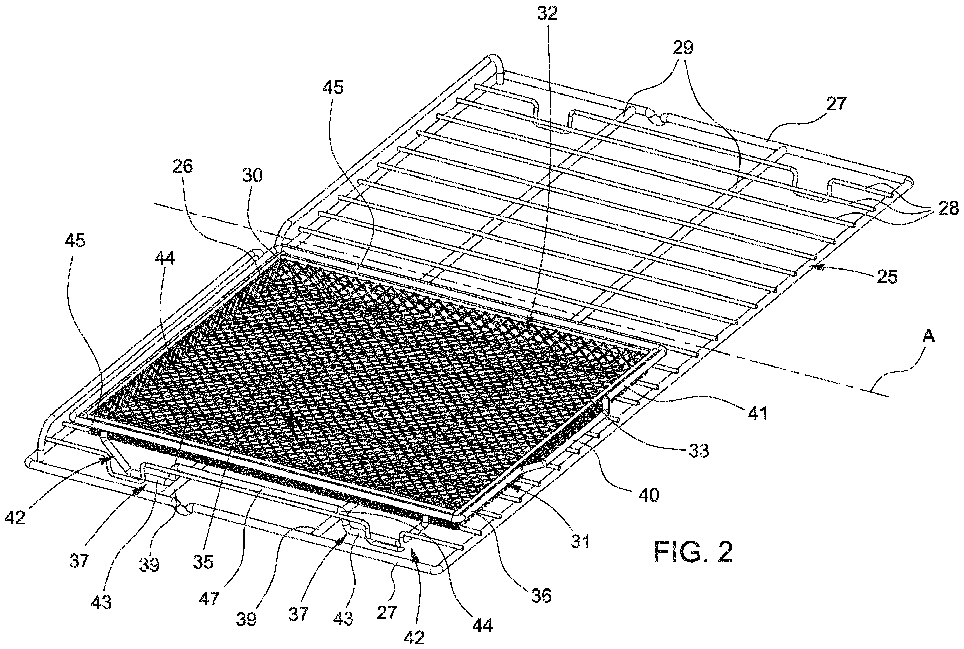

With reference to Figure 2, the oven 1 comprises at least one removable support grid 25 and a removable tray 26 for air-fry cooking.

Figure 2 shows only one support grid 25. The support grid 25 is provided with two opposite support sides 27 resting on respective axial side guides 24 (only visible in Figure 1).

In use, when the support grid 25 rests on the axial side guides 24 inside the cooking chamber 3, the support sides 27 of the support grid 25 are axially arranged.

The support grid 25 comprises a plurality of support bars 28 arranged parallel to each other and parallel to the support sides 27, and two cross bars 29, which extend from one support side 27 to the other transversely to the support bars 28. Preferably, the cross bars 29 are orthogonal to the support bars 28.

It is understood that the oven 1 may comprise several support grids 25 arranged on different levels to form support shelves within the cooking chamber 3.

The support grid 25 is removable. In other words, the support grid 25 may, if necessary, be removed from resting on the axial side guides 24 to be moved onto axial side guides 24 at a different level or to be removed from the cooking chamber 3.

The air-fry tray 26 is equipped with a baking pan 30 and a frame 31, which is coupled to a perimeter edge 32 of the baking tray 30 and is configured to provide stable support at least on the support grid 25.

Preferably, the frame 31 is configured to provide stable support on the support grid 25 and also on a support surface (e.g., a planar surface such as a table).

The baking pan 30 is defined by a mesh stretched and shaped to define a planar bottom 33 and the perimeter edge 32. The perimeter edge 32 is transverse to the planar bottom 33. In this way, the baking pan 30 defines a cavity 35 for housing the food to be cooked.

The frame 31 comprises a perimeter element 36 and at least four support elements 37, each of which is configured to define a stable support at least on respective anchor points 39 of the support grid 25. As already disclosed, the at least four support elements 37 are also configured to define, respectively, a stable support on a planar surface.

Preferably, the perimeter element 36 substantially follows the shape of the perimeter edge 32 of the baking pan 31 and has, on one side 41, a portion 40 shaped so as to define a handle for the user.

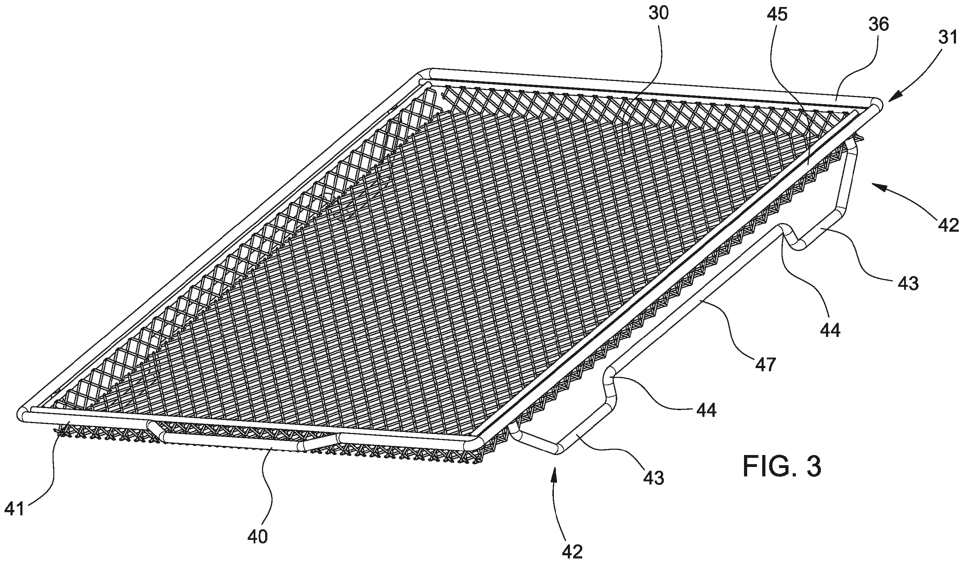

With reference to Figures 2 and 3, each support element 37 is defined by a leg 42 extending substantially orthogonally to the perimeter element 36 of the frame 31 and provided with a foot 43 configured for resting on a planar surface (e.g., a planar surface such as a table) and with a shoulder 44 configured for resting on a respective anchor point 39 of the support grid 25.

Preferably, the anchor points 39 on the support grid 25 are defined by respective portions of the cross bars 29.

Preferably, the perimeter element 36 of the frame 31 comprises two sides 45 opposite each other and transverse to the side 41. Each side 45 is provided with two support elements 37; the distance between the shoulders 44 of the support elements 37 of the same side 45 is substantially identical to the distance between two cross bars 29 of the support grid 25.

Preferably, the support elements 37 of the same side 45 are connected to each other by a connection bar 47.

More preferably, the support elements 37 and the respective connection bar 47 are made using a single tubular element folded so as to define the foot 43 and the shoulder 44 of each support element 37.

The tray 26 is removable. In other words, the tray 26 can be housed in the cooking chamber 3 by resting on a support grid 25 (due to the stable support defined by the shoulders 44 of the support elements 37) or removed from the cooking chamber 3 and rested on a planar surface (due to the stable support defined by the feet 43 of the support elements 37) .

The oven 1 is also provided with a control device (not shown for the sake of simplicity in the attached figures) configured to regulate the operation of the oven 1 by selective activation of the fans 21, and/or the grill resistance 16, and/or the bottom resistance 20, and/or the sole resistance 18.

In particular, the control device is configured to operate in several modes, including the air-fry mode, which is the object of the present invention.

When operating in air-fry mode, the control device comprises a preheating step, in which the food is not housed in the cooking chamber 3, and a cooking step, in which the food is housed in the cooking chamber 3.

Before proceeding with the cooking step, the food is placed in the tray 26 for air-frying.

During the cooking step, the control device is configured to activate at least one bottom resistance 20 and the respective fan 21. Preferably, the control device activates both bottom resistances 20 and the respective fans 21.

During the preheating step, the control device is configured to activate the grill resistance 16, the sole resistance 18, and at least one fan 21.

Preferably, the control device activates both fans 21 also during the preheating step. Due to the activation of the grill resistance 16, the sole resistance 18, and at least one fan 21, the preheating step is advantageously very fast.

Instead, during the cooking step, at least one bottom resistance 20 and the respective fan 21 are activated.

The presence of at least one fan 21 and of the openings of the deflector 12 (i.e., the grills and any perimeter openings) allows optimum circulation and distribution of the heat in the cooking chamber 3. In this way, it is not necessary to activate additional resistances to achieve the desired cooking. Furthermore, the construction of the baking pan 30 with a stretched mesh allows even circulation of the heat within the cavity 35, too, where the food to be cooked is housed. Lastly, it is clear that modifications and variations may be made to the oven and method described herein without departing from the scope of the appended claims.

## Claims

1. A ventilated oven comprising:
• a muffle (2), which extends along a longitudinal axis (A) and defines a cooking chamber (3) with an opening (4); the muffle (2) comprising a back wall (5) opposite the opening (4) and orthogonal to the axis (A), a roof wall (7) parallel to the axis (A), a floor wall (8) parallel to the axis (A) and two side walls (9, 10) parallel to the axis (A);
• at least one first fan (21), which is coupled to the back wall (5);
• at least one grill resistance (16), which is housed in the cooking chamber (3) and is coupled to the roof wall (7) ;
• at least one first bottom resistance (20), which is housed in the cooking chamber (3), is coupled to the back wall (5) and extends substantially around the first fan (21);
• at least one sole resistance (18), which is located outside the cooking chamber (3) and is coupled externally to the floor wall (8);
• a control device, configured to regulate the operation of the oven (1) by selective activation of the at least one first fan (21) and/or the grill resistance (16), and/or the bottom resistance (20) and/or the sole resistance (18);
the control device being configured to operate the oven in the air fry mode; wherein the air fry mode comprises a preheating step, wherein the food is not housed in the cooking chamber (3), and a cooking step wherein the food is housed in the cooking chamber (3); wherein the control device is configured to activate the at least one first bottom resistance (20) and the at least one first fan (21) during the cooking step.

2. The oven according to claim 1, wherein the control device is configured to activate the grill resistance (16), the sole resistance (18) and the at least one first fan (21) during the preheating step.

3. The oven according to claim 2, comprising a second fan (21) and a second bottom resistance (20), which extends around the second fan (21); wherein the control device is configured to also activate the second bottom resistance (20) and the respective second fan (21) during the cooking step.

4. The oven according to claim 3, wherein the control device is configured to also activate the second fan (21) during the preheating step.

5. The oven according to any of the preceding claims comprising:
• a removable support grid (25), which is provided with two opposite and axially arranged support sides (27) resting on respective axial side guides (24) coupled to the respective side walls (9, 10) of the muffle (2);
• a removable air-fry tray (26) equipped with a baking pan (30) and a frame (31), which is coupled to a perimeter edge of the baking tray (30) and is configured to provide stable support at least on the support grid (25) .

6. The oven according to claim 5, wherein the baking pan (30) is defined by a mesh stretched and shaped to define a planar bottom (33) and a perimeter edge (32) transverse to the planar bottom (33); wherein the baking pan (30) defines a cavity (35) for housing the food to be cooked.

7. The oven according to claim 6, wherein the frame (31) comprises a perimeter element (36) and at least four support elements (37), each of which is configured to define a stable support on respective anchor points of the support grid (25).

8. The oven according to claim 7, wherein the at least four support elements (37) are configured to define, respectively, also a stable support on a planar surface.

9. The oven according to claim 8, wherein the support grid (25) comprises a plurality of support bars (28) arranged parallel to each other and parallel to the support sides (27) and two cross bars (29), which extend from one support side (27) to the other transversely to the support bars (28); the anchor points (39) of the support grid (25) being defined by respective portions of the cross bars (29).

10. The oven according to claim 9, wherein the cross bars (29) are orthogonal to the support bars (28).

11. The oven according to claim 9 or 10, wherein each support element (37) is defined by a leg (42) extending substantially orthogonally to the perimeter element (36) of the frame (31) and provided with a foot (43) configured for resting on a planar surface and with a shoulder (44) configured for resting on a respective anchor point (39) of the support grid (25).

12. The oven according to claim 11, wherein the perimeter element (36) of the frame (31) comprises two opposite sides (45); wherein each side (45) is provided with two support elements (37); the distance between the shoulders (44) of the support elements (37) of the same side (45) being substantially identical to the distance between two cross bars (29) of the support grid (25).

13. A method for operating a ventilated oven in air-fry mode; the oven comprising:
• a muffle (2), which extends along a longitudinal axis (A) and defines a cooking chamber (3) with an opening (4); the muffle (2) comprising a back wall (5) opposite the opening (4) and orthogonal to the axis (A), a roof wall (7) parallel to the axis (A), a floor wall (8) parallel to the axis (A) and two side walls (9, 10) parallel to the axis (A);
• at least one first fan (21), which is coupled to the back wall (5);
• at least one grill resistance (16), which is housed in the cooking chamber (3) and is coupled to the roof wall (7) ;
• at least one first bottom resistance (20), which is housed in the cooking chamber (3), is coupled to the back wall (5) and extends substantially around the first fan (21);
• at least one sole resistance (18), which is located outside the cooking chamber (3) and is coupled externally to the floor wall (8);
the method comprising performing a preheating step, in which the food is not housed in the cooking chamber (3), and a cooking step in which the food is housed in the cooking chamber (3);
in the cooking step, the method comprising activating the at least one first bottom resistance (20) and the respective first fan (21).

14. The method according to claim 13, comprising activating the grill resistance (16), the sole resistance (18) and the at least one first fan (21) during the preheating step.

15. The method according to claim 14, wherein the oven (1) comprises a second fan (21) and a second bottom resistance (20), which extends around the second fan (21); the method comprising also activating the second bottom resistance (20) and the respective second fan (21) during the cooking step.

16. The method according to claim 15, wherein the method comprises also activating the second fan (21) during the preheating step.

17. The method according to any one of claims 13 to 16, comprising the step of arranging the food in a tray (26) for air-frying between the preheating step and the cooking step; the tray (26) comprising a baking tray (30) defined by a mesh stretched and shaped to define a planar bottom (33) and a perimeter edge (32) transverse to the planar bottom (33); wherein the baking tray (30) defines a cavity (35) for housing the food to be cooked.
